## Europäisches Patentamt
## European Patent Office
## Office européen des brevets

(19)

(11) Numéro de publication: **0 036 371**
**B1**

(12)

# FASCICULE DE BREVET EUROPEEN

(45) Date de publication du fascicule du brevet:
**27.06.84**

(51) Int. Cl.³: **C 10 B 53/02**

(21) Numéro de dépôt: **81400404.0**

(22) Date de dépôt: **17.03.81**

(54) Procédé de traitement par pyrolyse de produits ligno-cellulosiques.

(30) Priorité: **18.03.80 FR 8006044**
**20.10.80 FR 8022380**

(43) Date de publication de la demande:
**23.09.81 Bulletin 81/38**

(45) Mention de la délivrance du brevet:
**27.06.84 Bulletin 84/26**

(84) Etats contractants désignés:
**AT BE CH DE LI SE**

(56) Documents cités:
**FR - A - 944 248**
**FR - A - 993 486**
**FR - A - 1 209 713**
**GB - A - 449 619**

(73) Titulaire: **ASSOCIATION POUR LA RECHERCHE ET LE DEVELOPPEMENT DES METHODES ET PROCESSUS INDUSTRIELS (ARMINES), 60, Boulevard Saint-Michel, F-75272 Paris Cédex 06 (FR)**

(72) Inventeur: **Schwob, Yvan, 22, rue Paul Valéry, F-75116 Paris (Seine) (FR)**

(74) Mandataire: **Ducas, Michel Louis Marie et al, Cabinet Boettcher 23, rue La Boétie, F-75008 Paris (FR)**

BUNDESDRUCKEREI BERLIN

## Description

L'invention concerne un procédé de traitement par pyrolyse de produits ligno-cellulosiques fragmentés en vue notamment d'en obtenir du charbon et des produits pyroligneux liquides. On entend ici par produits ligno-cellulosiques et également par produits ligneux, les produits végétaux non fossiles, comme le bois, ses déchets, la paille, la bagasse de canne à sucre, etc. . . .

Il est connu de réaliser la pyrolyse des matières ligno-cellulosiques par voie sèche. De nombreux procédés ont été proposés dans ce but. Ils vont de la meule ancestrale aux appareils de carbonisation, tels que ceux décrits dans le document FR-A-2 424 312. Selon le cas, les produits de la pyrolyse sont constitués du seul charbon ou sont accompagnés d'une valorisation énergétique et/ou chimique des sous-produits pyroligneux et/ou des gaz non condensés.

Ces procédés connus utilisent la combustion interne ou autocombustion d'une partie de la masse ligneuse à carboniser, ce qui conduit à une perte de matière pouvant avoir une valeur d'usage meilleure que celle de combustible. Le but de l'invention est de proposer un nouveau procédé ménageant les produits valorisables et permettant d'obtenir un charbon de bois de très bonne qualité.

Le document FR-A-993 466 décrit un procédé de distillation du bois en vase clos, sans décomposition ni réaction exothermique mais il nécessite l'imprégnation par du goudron déshydraté du bois préalablement séché et il aboutit, non à du charbon de bois, mais à du charbon synthétique dur, lourd, ne s'effritant pas.

Selon l'invention, on mélange les produits ligno-cellulosiques fragmentés avec un liquide organique et on chauffe ce mélange à une température comprise entre 400 et 450°C environ. Ce liquide organique est de préférence constitué par la phase organique séparée des condensats pyroligneux déshydratés obtenue d'un précédent traitement à 400–450°C environ de produits ligno-cellulosiques fragmentés dans un liquide organique. On peut opérer à une pression voisine de la pression atmosphérique avec un rapport massique produits ligneux/produit liquide compris entre 1/10 et 5/1 et de préférence de l'ordre de 1/2.

Selon une particularité de l'invention, on utilise comme milieu liquide organique, pour initier une succession d'opérations de traitement, un alcool lourd en $C_{10}$ ou supérieur.

Le produit ligneux fragmenté est donc traité, à une pression voisine de la pression atmosphérique, en suspension dans un liquide organique de la classe des alcools lourd (supérieurs à $C_{10}$) dont le point d'ébullition est supérieur à 350°C. En chauffant graduellement un tel mélange, on observe le départ successif des produits gazeux de la pyrolyse, tandis que la matière ligneuse introduite se carbonise progressivement. La condensation des produits pyroligneux à température voisine de la température ambiante conduit à un liquide se séparant nettement en deux phases — aqueuse et organique — contenant, au total l'ensemble des corps condensables, tandis que les gaz habituels sont dégagés.

La masse de la phase organique recueillie se trouve être en excès par rapport à la masse du liquide primaire mis en jeu. Le demandeur a alors trouvé, de manière surprenante, qu'une nouvelle opération de pyrolyse effectuée, dans les mêmes conditions, sur une nouvelle charge ligneuse avec la même masse de cette phase organique, conduisait à une nouvelle séparation en deux phases des condensats pyroligneux, tandis que la température de pyrolyse finale s'élève de quelques degrés par rapport au point d'ébullition de l'alcool lourd utilisé pour la première opération.

En répétant cette opération une vingtaine de fois successives, sur des fractions égales de matières ligneuses et en utilisant à chaque fois un même poids de la phase organique issue de la précédente opération, on aboutit à un équilibre dans les conditions opératoires.

Ainsi, après une première série d'une vingtaine d'opérations, on aboutit à un processus reproductible conduisant à la fabrication de charbon, de liquides pyroligneux lourds en excès, de produits organiques solubles dans l'eau, et de gaz de pyrolyse.

On peut également initier une succession d'opérations de traitement en utilisant comme milieu liquide organique un hydrocarbure liquide, de préférence un hydrocarbure liquide à point d'ébullition de l'ordre de 300 à 400°C, tel qu'un fuel léger.

La demanderesse a également trouvé que la proportion d'hydrocarbure liquide par rapport au produit ligneux pouvait être considérablement réduite, de préférence aux environs de 1/1.

Il est avantageux de produire la chaleur nécessaire à la pyrolyse du mélange par combustion des gaz incondensables de traitement par pyrolyse.

Le procédé s'applique à toute matière ligno-cellulosique fragmentée telle que sciures, copeaux, plaquettes ou enveloppes végétales de quelque origine que ce soit.

Les matières sont introduites sans pré-séchage, l'eau se trouvant éliminée dans le processus, par augmentation du poids de la phase aqueuse. Cette dernière peut être traitée par tous moyens convenables pour en extraire les produits chimiques contenus, notamment le méthanol, l'acide acétique et les autres composés légers, habituellement condensés dans les liquides pyroligneux.

La production de gaz résiduaires combustibles permet une réalisation auto-thermique de la pyrolyse dès lors que la matière ligneuse de départ contient moins de quelques pour cent d'humidité. Au-delà, un apport calorifique supplémentaire est nécessaire pour lequel on emploiera avantageusement l'excès de liquide de la phase organique dont la production avoisine 5% de la masse mise en jeu par opération et dont le pouvoir calorifique est voisin de $33\,440 \times 10^6$ J/t.

On reste dans le cadre de l'invention en utilisant pour le chauffage de l'enceinte réactionnelle tout combustible différent et en utilisant les gaz et l'excès de la phase organique pour tout autre usage, comme par exemple, pour leur valorisation chimique — gaz de synthèse et extraction des fractions intéressantes contenues dans la phase organique. Dans ce dernier cas, il est évidemment avantageux de ne brûler que l'excès de la phase organique inexploitée à d'autres fins. On peut aussi arrêter à chaque opération la condensation des fractions les plus lourdes lorsque la masse organique recueillie correspond à ce qui est nécessaire pour une opération. Ceci a l'avantage d'éviter un accroissement inconsidéré de la densité de cette phase dont la séparation n'est facile par décantation que pour autant que sa densité se trouve éloignée de celle de la phase aqueuse.

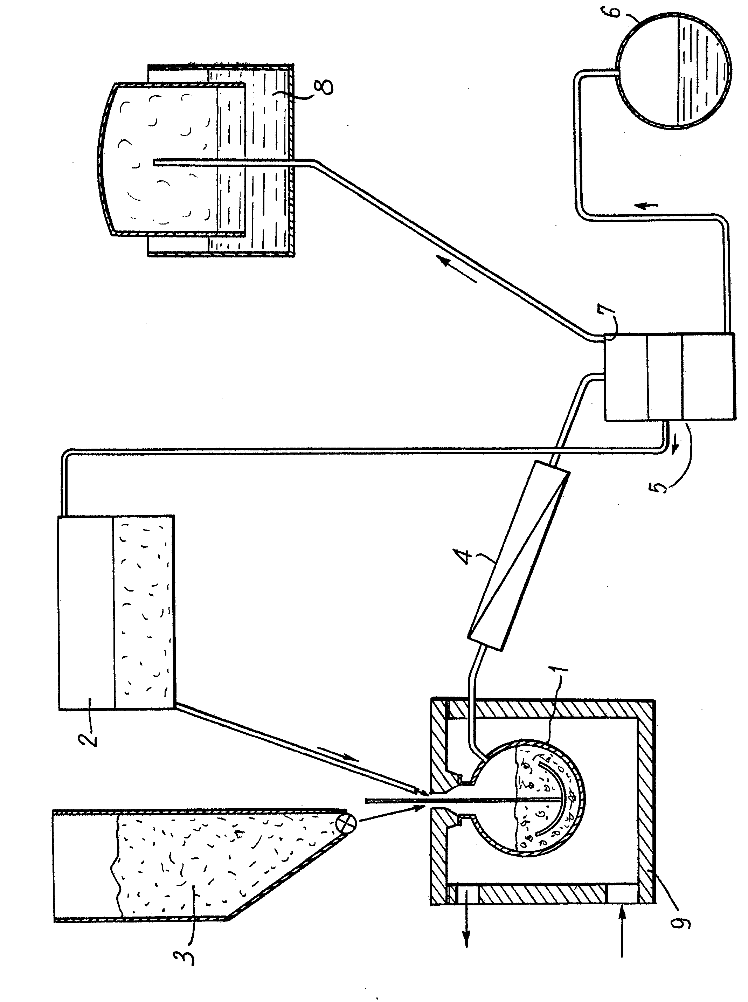

D'autres caractéristiques et avantages ressortiront de la description, qui sera donnée ci-après uniquement à titre d'exemple, d'un mode de réalisation d'une installation pour la mise en oeuvre du procédé. On se reportera à cet effet, à la figure unique annexée.

Un réacteur 1 constitué par une enceinte agitée et chauffée dans un four 9 est chargé par une masse q du liquide organique en provenance d'un réservoir de stockage 2 et une masse $\frac{q}{2}$ des produits ligneux fragmentés en provenance d'un stock 3. Le réacteur 1 est relié à un dispositif de condensation 4, amenant les gaz de pyrolyse à basse température. Ceux-ci constituent deux phases dans une enceinte 5. La phase organique est réintroduite dans le réservoir de stockage 2, tandis que la phase aqueuse, plus dense, est coulée dans un récipient 6 où elle s'accumule d'une opération à l'autre. Les gaz, incondensés, s'échappent par un orifice 7. Constitués par un mélange combustible, ils peuvent être utilisés à diverses fins, notamment pour le chauffage de l'enceinte réactionnelle 1, à travers un tampon de stockage constitué, par exemple, par un gazomètre 8.

Le charbon est déchargé du réacteur après chaque opération.

Il est essentiel d'observer que l'emploi d'un alcool lourd n'est nécessaire que pour la première opération.

Le tableau suivant donne, à titre d'exemple, les éléments des bilans pour onze des vingt premières opérations réalisées selon l'invention avec de la sciure de bois de hêtre dont l'himidité était voisine de 16% avec un alcool oxo en $C_{13}$.

Dans ce tableau, on a porté en:

A = Masse en kg de matière ligneuse introduite par opération
B = Masse en kg de liquide organique introduite par opération
C = Masse en kg de charbon obtenu en fin de réaction
D = Masse en kg de liquide organique condensé en fin de réaction
E = Température finale en °C de passage de la dernière goutte condensée
F = Densité de la phase organique recueillie
G = Masse en kg de la phase aqueuse recueillie.

Tableau

| Opération N° | 1 | 2 | 3 | 4 | 5 | 6 | 7 | 8 | 10 | 15 | 20 |
|---|---|---|---|---|---|---|---|---|---|---|---|
| A | 50 | 50 | 50 | 50 | 50 | 50 | 50 | 50 | 50 | 50 | 50 |
| B | 100 | 100 | 100 | 100 | 100 | 100 | 100 | 100 | 100 | 100 | 100 |
| C | 11,5 | 11,8 | 12,9 | 13,0 | 12,7 | 12,8 | 13,3 | 13,5 | 13,4 | 13,4 | 13,5 |
| D | 110,7 | 106,6 | 105,6 | 105,5 | 105,5 | 105,0 | 105,0 | 105,0 | 105,0 | 105,0 | 105,0 |
| E | 396 | 400 | 410 | 410 | 437 | 439 | 440 | 440 | 440 | 440 | 440 |
| F | 0,848 | 0,858 | 0,860 | 0,874 | 0,880 | 0,882 | 0,882 | 0,885 | 0,89 | 0,89 | 0,90 |
| G | 17,8 | 21,2 | 22,8 | 22,8 | 23,5 | 23,7 | 24,3 | 23,8 | 24,1 | 24,2 | 24,2 |

Exemple 1

Dans un réacteur de 5 m³ de capacité, chauffé à feu nu par un combustible, on introduit 2 tonnes de la phase organique en circulation et 1 tonne de sciure de bois contenant 20% d'eau à l'étuve à 100° C. On chauffe progressivement le réacteur jusqu'à 450° C.

Après condensation des produits pyroligneux dégagés, on obtient au total environ 2100 kg de phase organique, 480 kg de phase aqueuse et 200 kg de gaz combustibles. On obtient 270 kg de charbon de bois contenant 85% de carbone fixe. Ce charbon est ensuite aggloméré par tous moyens connus de manière à lui donner une présentation commerciale habituelle.

### Exemple 2

Dans le même réacteur de 5 m³, on opère de la même manière avec 2 t de phase organique, mais en utilisant comme matière première du bois en plaquettes, d'une taille voisine de celle utilisée dans l'industrie papetière; 1 tonne de plaquettes de ce type, en bois de hêtre, humide à 30% à l'étuve à 100°C, permet d'obtenir au total, environ

- — 250 kg de charbon sous forme de plaquettes
- —2080 kg de pyroligneux lourds
- — 510 kg de pyroligneux aqueux
- — 200 kg de gaz incondensés

Le procédé décrit s'applique également lorsque l'enceinte réactionnelle est maintenue à une pression différente de la pression atmosphérique. Hormis les complications technologiques entraînées par une marche à des pressions différentes, il faut noter qu'une surpression favorise l'élévation de température du milieu réactionnel, sans toutefois modifier fondamentalement le processus selon l'invention. Une marche à des pressions plus basses que l'ambiante complique les condensations sans non plus modifier fondamentalement le processus.

### Exemple 3

100 kg de produit ligneux fragmenté humide contenant 20% d'eau à 110°C, et 100 kg d'un fuel léger à point d'ébullition compris entre 300°C et 400°C sont traités dans les conditions décrites précédemment dans un évaporateur de type raclant.

La température de l'évaporateur a été amenée progressivement à 450°C.

Le résultat a été le suivant:

| | |
|---|---|
| Charbon restant après opération | 28 kg |
| Fuel récupéré dans la phase organique | 102 kg |
| Phase aqueuse | 55 kg |
| Gaz dégagés | 15 kg |

Ainsi récupère-t-on assez de phase organique pour une nouvelle opération, tandis que le gaz dégagé peut servir de combustible exactement comme précédemment.

La phase aqueuse contient toute l'eau libre et toute l'eau générée au cours de la pyrolyse. Elle contient, en outre, l'essentiel des produits pyroligneux solubles dans l'eau, soit le méthanol, l'acide acétique, le furfural et quelques phénols. Cette phase aqueuse peut être traitée séparément dans le but de valoriser économiquement les produits chimiques qui y sont dissous. Elle peut aussi être détruite par combustion dans un foyer qui peut être avantageusement celui dans lequel s'opère l'apport thermique nécessaire au processus de pyrolyse.

Le bilan thermique global est quasi-équilibré du fait de la valeur calorifique des gaz récupérés et du faible rapport pondéral fuel/bois mis en jeu au cours de la réaction.

Ainsi, cette façon de procéder permet-elle de réaliser un schéma particulièrment économique pour passer d'un produit ligneux à du charbon de bois. Elle s'adapte particulièrement aux déchets ligneux les plus divers tels que sciures, écorces, plaquettes brutes, balles de riz, pailles, etc. . . .

On reste également dans le cadre de l'invention en introduisant dans l'enceinte réactionnelle des proportions différentes des matières ligneuses et de la phase organique. La seule contrainte dans la variation de ces proportions est d'ordre technologique. Lorsque la masse de la phase organique est faible, la suspension des matières ligneuses est dense et peut nécessiter l'emploi d'un réacteur tournant afin d'assurer une bonne homogénéisation de ladite suspension. Un réacteur chauffé, de type raclant, permet d'aller au-delà des concentrations évoquées précédemment.

La masse organique mise en jeu par rapport à une masse $\frac{q}{2}$ de produits ligneux fragmentés, peut-elle varier entre les limites suivantes: $\frac{q}{10}$ à 5 q.

Le choix du réacteur sera, tout simplement, condition de la proportion effectivement utilisée. A titre d'exemple, on choisira les solutions suivantes:

— Réacteur agité : pour 5 q à q

— Réacteur tournant : pour 2 q à $\dfrac{q}{2}$

— Réacteur raclant : pour q à $\dfrac{q}{10}$

On reste également dans le cadre de l'invention en introduisant la matière ligneuse fragmentée par un panier conteneur amovible dans le but de faciliter les opérations de chargement et de déchargement.

## Revendications

1. Procédé pour la préparation du charbon de bois à partir de produits ligno-cellulosiques fragmentés, par chauffage à l'abri de l'air, à la pression atomosphérique caractérisé en ce qu'on mélange les produits ligno-cellulosiques fragmentés avec un liquide organique et on chauffe ce mélange à une température comprise entre 400 et 450° C environ.

2. Procédé selon la revendication 1, caractérisé en ce qu'on mélange les produits ligno-cellulosiques fragmentés avec un liquide organique constitué par la phase organique séparée des condensats pyroligneux déshydratés de la pyrolyse du bois et on chauffe ce mélange à une température comprise entre 400 et 450° C environ.

3. Procédé selon la revendication 1, caractérisé en ce qu'on utilise comme liquide organique un alcool lourd en $C_{10}$ ou plus, ayant un point d'ébullition supérieur à 350° C.

4. Procédé selon la revendication 1, caractérisé en ce qu'on utilise comme liquide organique un hydrocarbure ayant un point d'ébullition de l'ordre de 300 à 400° C, comme un fuel léger.

5. Procédé pour la préparation du charbon de bois à partir de produits ligno-cellulosiques fragmentés, par chauffage à l'abri de l'air, à la pression atmosphérique, caractérisé en ce qu'on mélange les produits ligno-cellulosiques fragmentés avec un liquide constitué par un alcool lourd en $C_{10}$ ou plus ayant un point d'ébullition supérieur à 350° C, ou un hydrocarbure ayant un point d'ébullition de l'ordre de 300 à 400° C, on chauffe ce mélange à une température de 400 450° C environ pour produire par pyrolyse du charbon de bois et des produits pyroligneux gazeux, on condense les gaz condensables de ces produits pyroligneux gazeux et on obtient une phase aqueuse et une phase organique, on recueille cette phase organique pour la recycler comme liquide dans une nouvelle opération de pyrolyse de produits ligno-cellulosiques.

6. Procédé selon l'une quelconque des revendications 1 à 5, caractérisé en ce que le rapport massique produits ligno-cellulosiques/produit liquide est compris entre 1/10 et 5/1 environ.

7. Procédé selon la revendication 6, caractérisé en ce que le rapport massique est de l'ordre de 1/1.

8. Procédé selon la revendication 5, caractérisé en ce qu'on utilise les gaz incondensables combustibles des produits pyroligneux gazeux pour produire au moins une fraction de la chaleur nécessaire au chauffage du mélange.

## Patentansprüche

1. Verfahren zur Gewinnung von Holzkohle aus zerkleinerten, Ligno-Zellulose enthaltenden Materialien durch Erwärmen unter Luftabschluß bei atmosphärischem Druck, dadurch gekennzeichnet, daß die zerkleinerten, Ligno-Zellulose enthaltenden Materialien mit einer organischen Flüssigkeit vermengt werden und daß dieses Gemisch auf eine Temperatur zwischen etwa 400 und 450° C erwärmt wird.

2. Verfahren nach Anspruch 1, dadurch gekennzeichnet, daß die zerkleinerten, Ligno-Zellulose enthaltenden Materialien mit einer organischen Flüssigkeit vermengt werden, welche aus der abgetrennten organischen Phase entwässerter Holzessigkondensate aus der Holzpyrolyse besteht, und daß das Gemisch auf einer Temperatur zwischen etwa 400 und 450° C erwärmt wird.

3. Verfahren nach Anspruch 1, dadurch gekennzeichnet, daß als organische Flüssigkeit ein schwerer Alkohol mit $C_{10}$ oder höherem Wert eingesetzt wird, dessen Siedetemperatur höher als 350° C ist.

4. Verfahren nach Anspruch 1, dadurch gekennzeichnet, daß als organische Flüssigkeit eine Kohlenwasserstoffverbindung wie beispielsweise ein leichtes Heizöl eingesetzt wird, deren Siedetemperatur zwischen 300 und 400° C liegt.

5. Verfahren zur Gewinnung von Holzkohle aus zerkleinerten, Ligno-Zellulose enthaltenden Materialien durch Erwärmen unter Luftabschluß bei atmosphärischem Druck, dadurch gekennzeichnet, daß die zerkleinerten, Ligno-Zellulose enthaltenden Materialien mit einer Flüssigkeit vermengt werden, welche aus einem schweren, $C_{10}$-haltigen oder höherwertigen Alkohol mit einer Siedetemperatur von mehr als 350° C besteht, beziehungsweise aus einer Kohlenwasserstoffverbindung mit einer Siedetemperatur zwischen 300 und 400° C, daß dieses Gemisch auf eine Temperatur zwischen rund 400 und 450° C erwärmt wird, so daß pyrolytisch Holzkohle und gasförmige Holzessigprodukte gewonnen werden, worauf die kondensationsfähigen Gase dieser gasförmigen Holzessigprodukte kondensiert werden, wobei man eine wäßrige Phase und eine organische Phase erhält, diese organische Phase gewinnt und sie als Flüssigkeit wieder einem neuen Pyrolysevorgang bei Ligno-Zellulose enthaltenden Materialien zuführt.

6. Verfahren nach einem der Ansprüche 1 bis 5, dadurch gekennzeichnet, daß das Massenverhältnis zwischen den Ligno-Zellulose enthaltenden Materialien und dem flüssigen Stoff zwischen etwa 1 : 10 und 5 : 1 liegt.

7. Verfahren nach Anspruch 6, dadurch gekennzeichnet, daß das Massenverhältnis in der Größenordnung von 1 : 1 liegt.

8. Verfahren nach Anspruch 5, dadurch gekennzeichnet, daß die brennbaren, jedoch nicht kondensierbaren Gase der gasförmigen Holzessigprodukte zur Gewinnung zumindest eines Bruchteils der zum Erwärmen des Gemisches erforderlichen Wärme eingesetzt werden.

## Claims

1. Process for the preparation of charcoal from fragmented ligno-cellulosic products, by heating away from air, at atmospheric pressure, characterized in that the fragmented ligno-cellulosic products are mixed with an organic liquid and this mixture is heated to a temperature of between about 400 and 450° C.

2. Process according to claim 1, characterized in that the fragmented ligno-cellolosic products are mixed with an organic liquid constituted by the organic phase separated from the dehydrated pyroligneous condensates of pyrolysis of the wood and this mixture is heated to a temperature of between about 400 and 450° C.

3. Process according to claim 1, characterized in that a heavy alcohol with 10 or more carbon atoms, having a boiling point higher than 350° C, is used as organic liquid.

4. Process according to claim 1, characterized in that a hydrocarbon having a boiling point of the order of 300 to 400° C, such as a light fuel, is used as organic liquid.

5. Process for the preparation of charcoal from fragmented ligno-cellulosic products, by heating away from air, at atmospheric pressure, characterized in that the fragmented ligno-cellulosic products are mixed with a liquid constituted by a heavy alcohol with 10 or more carbon atoms, having a boiling point higher than 350° C, or a hydrocarbon having a boiling point of the order of 300 to 400° C, this mixture is heated to a temperature of about 400 to 450° C to produce charcoal and gaseous pyroligneous products by pyrolysis, the condensable gases of these gaseous pyroligneous products are condensed and an aqueous phase and an organic phase are obtained, said organic phase is collected and recycled as liquid in a new operation of pyrolysis of ligno-cellulosic products.

6. Process according to any one of claims 1 to 5, characterized in that the ligno-cellulosic products/liquid product ratio by weight is between about 1/10 and 5/1.

7. Process according to claim 6, characterized in that the ratio by weight is of the order of 1/1.

8. Process according to claim 5, characterized in that the combustible uncondensable gases of the gaseous pyroligneous products are used for producing at least a fraction of the heat necessary for heating the mixture.